# EUROPÄISCHE PATENTSCHRIFT

(11) **EP 3 529 029 B1**
(45) Veröffentlichungstag und Bekanntmachung des Hinweises auf die Patenterteilung: **25.11.2020**
(21) Anmeldenummer: 17791623.6
(22) Anmeldetag: 16.10.2017
(51) Int. Cl.: B29C 45/17

(54) **FORMSCHLIESSEINHEIT MIT EINER FORMHÖHENVERSTELLUNG SOWIE VERFAHREN ZU DEREN BETÄTIGUNG**
MOULD CLAMP WITH MOULD HEIGHT ADJUSTMENT SYSTEM AND METHOD FOR THE ACTUATION THEREOF
UNITÉ DE FERMETURE D'UN MOULE À RÉGLAGE EN HAUTEUR DU MOULE, ET PROCÉDÉ PERMETTANT DE L'ACTIONNER

(30) Priorität: 18.10.2016 DE 102016119840
(43) Veröffentlichungstag der Anmeldung: 28.08.2019
(73) Patentinhaber: Arburg GmbH + Co KG, 72290 Loßburg (DE)
(72) Erfinder: DUFFNER, Eberhard, 72181 Starzach (DE); BLETSCHER, Rainer, 72270 Baiersbronn (DE)
(74) Vertreter: RPK Patentanwälte Reinhardt, Pohlmann und Kaufmann Partnerschaft mbB
(86) Internationale Anmeldenummer: PCT/EP2017/076363
(87) Internationale Veröffentlichungsnummer: WO 2018/073179

(56) Entgegenhaltungen:
- WO-A1-99/48667
- WO-A1-03/076161
- WO-A1-2006/003046
- JP-U- H 036 907
- US-A- 4 716 952

## Beschreibung

Die Erfindung betrifft eine Formschließeinheit für eine Spritzgießmaschine zur Verarbeitung von Kunststoffen und anderer plastifizierbarer Massen mit einer Formhöhenverstellung nach dem Oberbegriff des Anspruches 1 sowie ein Verfahren zur Betätigung einer derartigen Formhöhenverstellung nach dem Oberbegriff des Anspruches 12.

Formhöhenverstellungen sind an Spritzgießmaschinen insbesondere dann erforderlich, wenn zum Öffnen und Schließen der Spritzgießmaschine ein Kniehebelantrieb verwendet wird. Ein derartiger Kniehebelantrieb arbeitet dann am effizientesten, wenn seine Strecklage ungefähr mit der Position des beweglichen Formträgers relativ zum stationären Formträger beim Formschluss, also beim Anliegen der Teile der Spritzgießform aneinander zusammenfällt. Diese Position ist allerdings von der sogenannten Formhöhe des Werkzeugs abhängig. Unter der "Formhöhe" wird dabei der in Schließrichtung gemessene Abstand zwischen beweglichem und stationärem Formträger bei Formschluss verstanden.

Bekannt sind Vorrichtungen zur Einstellung der Formhöhe, die zum einen als spielfreie Systeme mit Vorspannung ausgeführt sind, oder zum anderen spielbehaftet, mit dem Nachteil von erhöhtem Verschleiß und Schlaggeräuschen.

Eine spielfreie Variante einer Formschließeinheit mit einer Formhöhenverstellungeinrichtung ist aus der dem Oberbegriff des Anspruches 1 zu Grunde liegenden EP 1 487 626 B1 bekannt. Eine derartige spielfreie Formhöhenverstellung benötigt mehr Aufwand als eine spielbehaftete, da zum Fahren der Formhöhenverstellung die Vorspannung entlastet werden muss. Nachteilig ist, dass bei dieser Formhöhenverstellung diese Entlastung nur an einem außerhalb des üblichen Arbeitsbereichs liegenden Arbeitspunkt der Schließeinheit möglich ist. Dazu wird die Formschließeinheit z.B. in eine Endlage gefahren, in der eine selbsttätige Entlastung der Vorspannelemente erfolgt. In dieser Stellung kann die Formhöhenverstellung reibungsarm umpositioniert werden. Damit erfolgt die Entlastung der Vorspannung zur reinen Einstellung der Werkzeughöhe im Umrüstbetrieb z.B. beim Wechsel der Spritzgießform. Zur Einstellung dieser geänderten Formhöhe muss eine explizite Lösestellung angefahren werden, die nur im Umrüstbetrieb zu erreichen ist, aber im normalen Spritzbetrieb nicht angefahren werden kann.

Aus der DE 198 12 741 A1 ist eine Formhöhenverstellung bekannt, bei der die Formschließeinheit mit ihrer eigenen Schließeinrichtung die Stellung des Abstützelements verstellen kann. Hierzu wird am beweglichen Formträger als auch am Abstützelement für die Schließeinrichtung jeweils eine Verriegelungseinrichtung vorgesehen. Im Normalzustand für den Herstellungsprozess ist das Abstützelement verriegelt und der bewegliche Formträger zur Bewegung freigesetzt, also entriegelt. Soll die Formhöhe verändert werden, wird der bewegliche Formträger verriegelt und das Abstützelement freigesetzt, so dass bei Betätigung der Schließeinrichtung die Stellung des Abstützelements verändert werden kann. Die Formhöhenverstellung ist nur im lastfreien Zustand entriegelbar und verstellbar. Dazu müssen die Betriebskraft und die dynamischen Fahrkräfte abgebaut (Null) sein, damit die Formhöhenverstellung "entriegelt" und über das Festsetzen vom beweglichen Formträger über den Antriebsstrang bewegt werden kann. Eine Entlastung im laufenden Betrieb führt aufgrund unkontrolliert frei werdender Kraftkomponenten zu Beschädigungen am System. Zudem ist eine derartige Vorrichtung ab einer bestimmten Maschinengröße nicht mehr geeignet, das Abstützelement gleichmäßig und ohne Verkanten zu verschieben.

Aus der US 4,281,977 A ist eine Formhöhenverstellung bekannt, bei der an Holmen, die meist am stationären Formträger festgelegt sind und dem beweglichen Formträger zur Führung dienen, Gewindeabschnitte vorgesehen sind, die mit Muttern in Verbindung stehen. Diese Muttern werden über einen gesonderten Antrieb zur Formhöhenverstellung angetrieben. Die Muttern weisen auf ihrer Außenseite einen Zahnkranz auf, so dass sie entweder mit einem Zahnkranz oder mit einem Zahnriemen betätigt werden können.

Aus der DE 28 12 301 A1 ist eine Werkzeugschließeinheit für Spritzgießmaschinen bekannt, an der Verriegelungsmuttern über entsprechende Schmiermittelkanäle mit Schmiermittel versorgt werden.

Aus der DE 101 61 911 C1 ist eine Vorrichtung zur Verstellung der Einbauhöhe eines Werkzeuges, insbesondere eines Spritzgießwerkzeuges bekannt, die eine über Holme geführte bewegliche Werkzeugaufspannplatte umfasst. Mit jedem Holm sind Verstellelemente verbunden, die über einen zentralen Antrieb axial relativ zum Holm verstellbar sind und die Werkzeugaufspannplatte in ihrer Lage relativ zu den Holmen verändern. Mindestens eines der Verstellelemente ist mittels einer Feststellvorrichtung gegen eine Axialbewegung und gegen Verdrehen arretierbar.

In der DE 102 10 869 C1 ist an einer Kunststoffspritzgießmaschine eine Formhöhenverstellung zur Veränderung des Abstandes zwischen Formträger und Abstützelement mittels eines Antriebs vorgesehen. Eine Verriegelungseinrichtung verriegelt das Abstützelement in seiner jeweiligen Stellung. Im Bewegungsbereich des beweglichen Formträgers ist eine Lösestellung vorgesehen, welche die Entriegelung der Verriegelungseinrichtung bewirkt, wenn der bewegliche Formträger in der Lösestellung ist. Dadurch wird eine Formhöhenverstellung geschaffen, welche die sich an der Maschine bewegenden Elemente zu ihrer Betätigung vorteilhaft ausnutzt.

Aus der WO 2006/003046 A1 ist eine Formschliesseinheit, insbesondere für eine Spritzgießmaschine bekannt. Die Formschliesseinheit umfasst mindestens eine feststehende und eine bewegliche Formschlussplatte und einen Hubantrieb für die bewegliche Formschlussplatte. Ferner umfasst die Formschliesseinheit mindestens eine längenverstellbare, aus einer Gewindespindel und einer Spindelmutter, die eine der Formschlussplatten abstützt, bestehende Gewindeverbindung zur Formhöhenverstellung und eine die Spindelmutter relativ zur Gewindespindel arretierende, zur Längenverstellung der Gewindeverbindung selektiv lösbare Spannvorrichtung. Die Formschließeinheit enthält als Spannvorrichtung eine mit der Spindelmutter verkoppelte Spannmutter und einen die Spindelmutter mit der Spannmutter verspannenden Aktuator. Gewindespindel und Formschlussplatte sind über die Spindelmutter schließ- und verriegelungskraftübertragend und über den Aktuator entgegen der von diesem erzeugten Spannkraft öffnungskraftübertragend miteinander verkoppelt. Dadurch wird ein Lösen und Arretieren der Formhöhenverstellung ohne Unterbrechung des Arbeitszyklus ermöglicht.

Hiervon ausgehend liegt der vorliegenden Erfindung die Aufgabe zugrunde, eine Formschließeinheit mit einer Formhöhenverstellung zu schaffen, die eine dynamische Betätigung erlaubt. Dies wird mit einer Formschließeinheit mit den Merkmalen des Anspruches 1 sowie durch ein Verfahren mit den Merkmalen des Anspruches 12 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Formschließeinheit weist einen stationären Formträger, einen beweglichen Formträger sowie eine Schließeinrichtung auf zum Bewegen des beweglichen Formträgers entlang einer Schließrichtung auf den stationären Formträger zu und von diesem weg. Für die Schließeinrichtung ist ferner ein verstellbares Abstützelement vorgesehen. Mittels einer Formhöhenverstellung kann der Abstand zwischen stationärem Formträger und verstellbarem Abstützelement unter Bewegung des Abstützelementes verstellt werden. Hierzu ist ein Antrieb zur Betätigung der Formhöhenverstellung vorgesehen. In der jeweiligen Stellung kann das Abstützelement unter Vorspannung von Verriegelungselementen mittels einer Verriegelungseinrichtung lösbar verriegelt werden. Die Verriegelungseinrichtung ist während der Bewegung des beweglichen Formträgers in Schließrichtung auf den stationären Formträger zu und von diesem weg unter Aufhebung der Vorspannung lösbar. Die Verriegelungselemente sind durch aktive Betätigungselemente zur Freisetzung der Formhöhenverstellung wahlweise entlastet oder vorgespannt und damit bedarfsweise entlastbar. Beim Betrieb der Spritzgießmaschine sind Mittel zur Überwachung einer auf das Abstützelement wirkenden Summenkraft als dynamische Betriebskraft ohne Vorspannung vorgesehen und die Verriegelungselemente der Verriegelungseinrichtung sind zum Aufheben der Vorspannung in einem Zeitraum lösbar, in dem die erfasste Summenkraft größer gleich Null ist.

Das aktive Betätigen erlaubt es dem Anwender, die Verriegelungselemente und damit die Formhöhenverstellung dynamisch nach Bedarf vorzugsweise durch aktiv betätigbare Betätigungselemente zu lösen bzw. zu betätigen, d.h. selbst im eigentlichen Bewegungsablauf der Schließeinheit beim Schließen und Öffnen der Spritzgießform kann eine Einstellung der Formhöhe oder Korrektur erfolgen. Im Zusammenspiel mit einer geeigneten Sensorik ist es daher möglich, zu jedem Zeitpunkt auf eine präzise Parallelität der Formträger und damit auf die Qualität der so hergestellten Spritzgießteile einzuwirken. Dies gestattet durch ein schnelles Lösen der Vorspannkraft eine aktive Schließkraftregelung.

Da die Verriegelungselemente wie Muttern im Betrieb vorgespannt werden können, ist auch ein größeres Gewindespiel zwischen Holm oder Säule - als Führungselement für die Formträger - und zugehöriger Mutter möglich, da sich somit das Spiel weder als Klack-Geräusch noch als Verschleißbeschleuniger negativ auswirkt. Gleichzeitig werden dadurch die Montage der Spritzgießmaschine erleichtert und die Herstellungskosten verringert. Während des Betriebs selbst erfolgt kein ständiger Flankenwechsel der Muttern im Gewinde aufgrund der Dynamik und der Schließkraft, da hierauf gezielt Einfluss genommen werden kann.

Vorzugsweise ist die Formhöhenverstellung während der Bewegung des beweglichen Formträgers zur Verstellung des Abstandes zwischen Abstützelement und Formträger betätigbar. Damit kann auch individuell zyklusweise auf sich ändernde Rahmenbedingungen noch im Zyklus selbst eingegangen werden.

Die Formhöhenverstellung ist vorzugsweise an einer als Abstützelement ausgebildeten Verstellplatte angeordnet. Diese Verstellplatte kann eine gesonderte Platte sein, die ihrerseits wiederum gegenüber einem Abstützelement verstellbar ist, sie kann aber ebenso ins Abstützelement integriert sein. Eine derartige Formhöhenverstellung mit Abstützelement ist ebenso bei einem Zweiplattensystem einsetzbar, bei dem die Formhöhenverstellung an einem der Formträger gelagert sein kann.

Vorzugsweise weist die Formhöhenverstellung Muttern als Verriegelungselemente auf, die mit Gewindeabschnitten an Führungselementen für das Abstützelement in Eingriff stehen und mittels eines Antriebs der Formhöhenverstellung verstellbar sind. Damit ergibt sich eine einfache und kostengünstige und darüber hinaus auch an vielen Spritzgießmaschinen bereits eingesetzte zuverlässige Verbindung zwischen den Verriegelungselementen und den Führungsholmen oder -säulen der Spritzgießmaschine.

Es ist von Vorteil, wenn für die Formhöhenverstellung die Muttern gleichzeitig als Verriegelungselemente verwendet werden und zudem das Betätigungselement, mit dem die Verriegelungselemente entlastbar sind, zugleich auch das Verbindungsmittel ist, durch das die Muttern miteinander in Wirkverbindung stehen. Dadurch ergibt sich mit ein und derselben Komponente eine mehrfache Wirkung, was zu einer günstigen und effektiven Herstellung der Formschließeinheit beiträgt.

Unter der Wirkung der elastischen Mittel sind vorteilhaft je zwei Muttern an jedem Führungselement vorgesehen, die in Folge der Wirkung der elastischen Mittel miteinander konterbar sind. Dadurch ergibt sich eine spielfreie Verriegelung an den Gewindeabschnitten der Führungsholme, die durch die Betätigungselemente jederzeit wieder leicht aufzuheben ist.

Die Muttern liegen vorzugsweise an einer Spannplatte und am Abstützelement an, die beide über das wenigstens eine Verbindungsmittel miteinander in Verbindung stehen, um bei Betätigung der Verriegelungseinrichtung die Muttern zwischen sich zusätzlich zu spannen und abzusichern. Damit ergibt sich eine zuverlässige und sichere Verriegelung.

Um die Formhöhenverstellung ausreichend zu schmieren, ist ein mehrstufiges Schmierkonzept vorgesehen. Vorzugsweise besitzen die Muttern Verbindungskanäle und/oder Nuten, die zur Vermittlung von Schmiermittel an die Gewindeabschnitte mit einem Schmiermittelreservoir in Verbindung stehen. Die Schmierung erfolgt vorzugsweise über einen stationären Zugang an der Gegenlagerplatte. Über diesen Zugang wird ein Schmierstoffreservoir direkt in den beiden Muttern befüllt. Über die Verbindungskanäle und umlaufenden Nuten ist eine optimale Verteilung des Schmiermediums an den Gewindekontaktstellen der beiden Muttern gewährleistet.

Vorzugsweise ist das Betätigungselement durch eine Kolbenstange einer Kolbenzylindereinheit gebildet. Die Kolbenstange ist mit einem am Abstützelement gelagerten und gegen die Kraft der elastischen Mittel betätigbaren Kolben verbunden. Grundsätzlich sind auch andere Hubelemente denkbar, durch die die Kraft der elastischen Mittel bedarfsweise aufgehoben werden kann. Denkbar sind z.B. pneumatische oder elektromechanische Elemente.

Der Zylinderraum der Kolbenzylindereinheit ist am Abstützelement angeordnet und die an der Spannplatte gelagerte Kolbenstange durchgreift die ebenfalls am Abstützelement gelagerten elastischen Mittel. Dadurch ergibt sich ein kompakter Aufbau einer gegen die Kraft elastischer Mittel gelagerten Kolbenzylindereinheit. Gleichzeitig ist diese zuverlässig am Abstützelement gelagert.

Vorzugsweise ergibt sich eine optimale Abstimmung der Kräfte dann, wenn die Vorspannkraft der elastischen Mittel größer ist als die dynamischen Kräfte beim Öffnen und Schließen der Spritzgießform, also beim Betrieb der Spritzgießmaschine, und wenn die Kraft der Betätigungselemente selbst größer ist als diese Vorspannkraft der elastischen Mittel. Wird dies berücksichtigt, kann ein spielfreier Betriebszustand ohne Verstellung erreicht werden. Sobald aus dem Prozess heraus Modifikationen an der Formhöhe erforderlich werden, kann mittels des Betätigungselements (Kolben) die Vorspannung im definierten Bereich aufgehoben werden, was die technische Grundlage für eine verschleißarme Verstellung schafft. Wird die Vorspannkraft hingegen gleich oder kleiner der Betriebskraft gewählt, kann es zu einem unschönen Klack-Effekt kommen, da im Lastwechsel unterschiedliche Gewindeflanken belastet werden, was den Verschleiß erhöht. Wird die Vorspannung zu hoch gewählt und wird für den Verstellvorgang entweder gar nicht oder nicht vollständig "entlastet", kommt es zu einem verschleißbehafteten Verstellvorgang, bei dem das System nach kurzer Zeit zerstört wird.

Erfindungsgemäß wird die Aufgabe auch durch ein Verfahren mit den Merkmalen des Anspruches 12 gelöst, bei dem an einer Spritzgießmaschine ein stationärer Formträger, ein beweglicher Formträger, wenigstens ein verstellbares Abstützelement für eine Schließeinrichtung, eine angetriebene Formhöhenverstellung und eine Verriegelungseinrichtung vorgesehen sind. Das Verfahren weist dabei folgende Schritte auf: Aufheben der Vorspannung durch aktives Entlasten der Verriegelungselemente und Lösen der Verriegelungselemente aus ihrer jeweiligen Stellung während der Bewegung des beweglichen Formträgers in Schließrichtung auf den stationären Formträger zu und von diesem weg beim Betrieb der Spritzgießmaschine; Freisetzen der Formhöhenverstellung; Verändern des Abstandes zwischen stationärem Formträger und Abstützelement unter Bewegung des Abstützelements mittels des Antriebes; Festlegen der Formhöhenverstellung durch Verriegeln der Verriegelungseinrichtung unter erneuter Aufbringung der Vorspannung. Dabei wird beim Betrieb der Spritzgießmaschine eine auf das Abstützelement wirkende Summenkraft als dynamische Betriebskraft ohne Vorspannung überwacht und ein Aufheben der Vorspannung der Verriegelungselemente erfolgt in einem Zeitraum, in dem die erfasste Summenkraft größer gleich Null ist. Durch dieses Verfahren kann jederzeit dynamisch aktiv die Formhöhenverstellung betätigt werden. Dies gestattet insbesondere eine aktive Schließkraftregelung. Zudem ist ein größeres Gewindespiel zwischen Führung und Mutter möglich.

In vorteilhafter Weise wird die Formhöhenverstellung während der Bewegung des beweglichen Formträgers zur Verstellung des Abstandes betätigt. Dies ist gleichbedeutend damit, dass jederzeit eine aktive Entriegelung der Formhöhenverstellung möglich ist, um das dadurch aktiv auch kurzfristig auftretenden Abweichungen vom Sollverlauf der Bewegung oder der Schließkraft entgegenzuwirken. Der Anwender bzw. die Maschinensteuerung kann damit mit hoher Dynamik auf den Spritzzyklus selbst im jeweiligen Spritzzyklus Einfluss nehmen.

Dadurch, dass beim Betrieb der Spritzgießmaschine eine auf das Abstützelement wirkende dynamische Betriebskraft sowie die Summenkraft erfasst und überwacht wird, kann sichergestellt werden, dass ein Entlasten der Verriegelungselemente in einem Zeitraum erfolgt, in dem die erfasste Summenkraft größer gleich Null ist. Damit kann innerhalb der Öffnungs- und Schließbewegung der Formschließeinheit über die Summenkraftkennlinie ein Bereich identifiziert werden, innerhalb dem eine verschleiß- und geräuscharme Verstellung ohne Lastwechsel im Mutterngewinde möglich ist.

Weitere Vorteile ergeben sich aus den Unteransprüchen und der nachfolgenden Beschreibung eines bevorzugten Ausführungsbeispiels.

Im Folgenden wird die Erfindung anhand eines Ausführungsbeispiels näher erläutert. Es zeigen:
- Fig. 1: eine dreidimensionale Seitenansicht einer Formschließeinheit für eine Spritzgießmaschine mit einer erfindungsgemäßen Formhöhenverstellung,
- Fig. 2: einen vergrößerten Ausschnitt aus der Spritzgießmaschine gemäß Fig. 1 im Bereich des Abstützelements,
- Fig. 3: einen vergrößerten Ausschnitt aus Fig. 2 im Bereich der Verriegelungseinrichtung,
- Fig. 4: einen Schnitt durch die Verriegelungseinrichtung nach Linie IV-IV von Fig. 3,
- Fig. 5: einen Schnitt durch die Verriegelungseinrichtung nach Linie V-V von Fig. 3,
- Fig. 6: ein Diagramm, das die dynamische Betriebskraft auf der Verstellplatte in Axialrichtung der Schließeinheit über der Zeit eines Spritzzyklus zeigt.

### Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

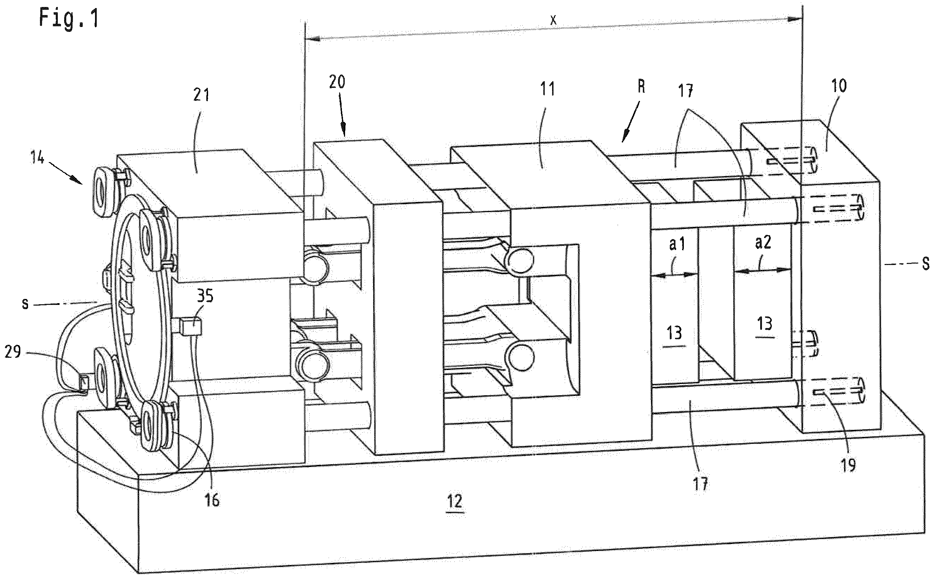

Figur 1 zeigt in perspektivischer Seitenansicht eine Formschließeinheit für eine Kunststoffspritzgießmaschine, die zur Verarbeitung von Kunststoffen und anderer plastifizierbaren Massen wie pulvrige oder keramische Massen eingesetzt werden kann. Auf dem Maschinenfuß 12 ist die Formschließeinheit angeordnet, die einen stationären Formträger 10 und einen beweglichen Formträger 11 aufweist. Zwischen den Formträgern können in einem Formspannraum R Spritzgießformen 13 angeordnet werden, die auch unterschiedliche Formhöhen aufweisen können. Die Formhöhe der gesamten Form ist das Maß, das sich aus der Summe der Maße a₁ und a₂ ergibt. Diese Summe entspricht gleichzeitig bei einer aufgespannten Spritzgießform dem minimalen Abstand zwischen den Formträgern in Schließrichtung s-s. Der bewegliche Formträger 11 wird über eine Schließeinrichtung 20 betätigt, die im Ausführungsbeispiel durch einen Kniehebelmechanismus gebildet ist, grundsätzlich kann jedoch jede beliebige andere Antriebseinheit ebenso verwendet werden. Anstelle der beschriebenen hydraulischen oder pneumatischen Kolben-Zylindereinheiten als Schließeinrichtung 20 können z.B. so ebenso elektromechanische Antriebe oder Linearantriebe oder andere Antriebsmittel vorgesehen sein.

Im Ausführungsbeispiel sind Führungselemente 17 als Führungsholme vorgesehen, die am stationären Formträger gelagert sind. Derartige Führungsholme werden mitunter auch als Säulen bezeichnet. Sie dienen im Ausführungsbeispiel dem beweglichen Formträger 11 als auch dem Abstützelement 21 zur Führung bei ihrer noch zu beschreibenden Bewegung. Grundsätzlich kann die im Folgenden beschriebene Formhöhenverstellung jedoch auch an einer holmlosen Spritzgießmaschine eingesetzt werden, bei der stationärer Formträger 10 und beweglicher Formträger 11 über ein um den Formspannraum R herumgeführtes Kraftübertragungselement, z.B. ein oder mehrere Bügel, miteinander verbunden sind.

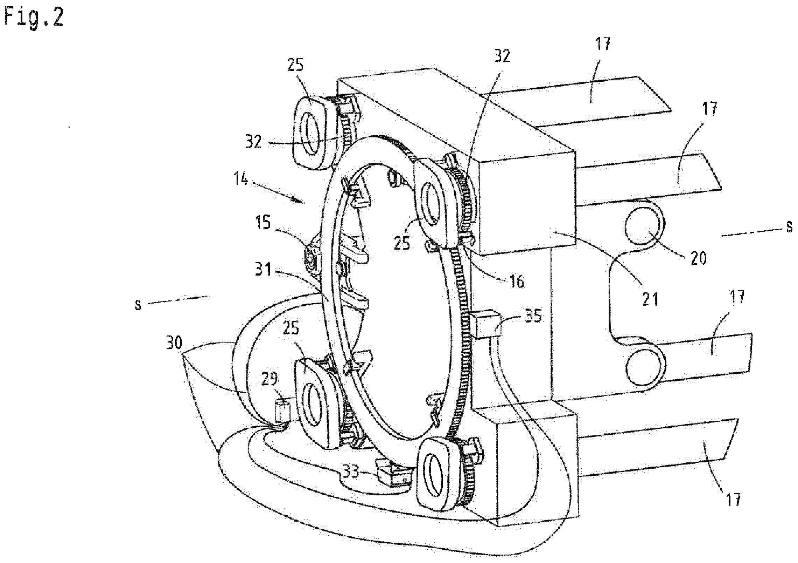

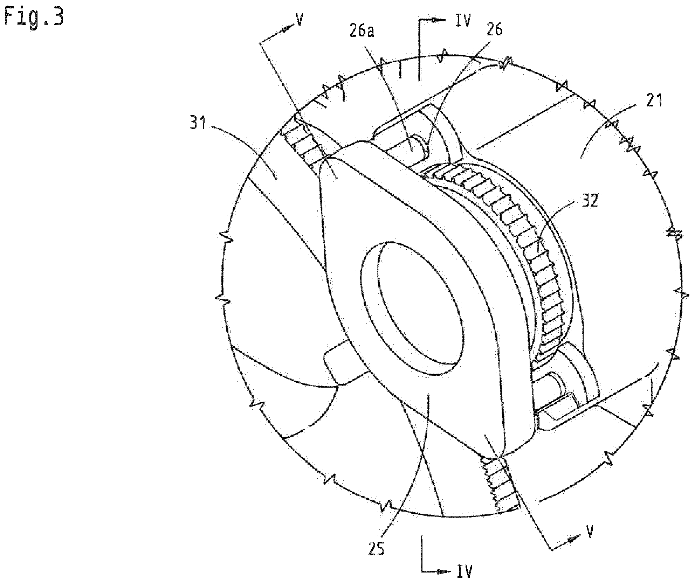

Das verstellbare Abstützelement 21 trägt in Richtung auf den beweglichen Formträger 11 die Schließeinrichtung 20, mit der der bewegliche Formträger betätigt wird. Dem Abstützelement 21 zugeordnet ist eine Formhöhenverstellung 14 zur Verstellung des Abstandes x zwischen stationärem Formträger 10 und verstellbarem Abstützelement 21 unter Bewegung des Abstützelementes. Die Formhöhenverstellung 14 ist über einen in Fig. 2 dargestellten Antrieb 15 betätigbar. Von diesem Antrieb sind in Fig. 2 lediglich die Antriebsräder zu erkennen, mit denen ein zur Schließrichtung zentrales Antriebszahnrad 31 außenseitig angetrieben wird. Mit seinen außenseitigen Zähnen steht dieses Antriebszahnrad 31 auch mit Abtriebszahnrädern 32 in Wirkverbindung, auf die weiter unten noch näher eingegangen wird. Gemäß Fig. 2 ist eine Verrieglungseinrichtung 16 zur lösbaren Verriegelung des Abstützelementes 21 in seiner jeweiligen Stellung unter Vorspannung von Verriegelungselementen vorgesehen, die im Ausführungsbeispiel durch die Muttern 22, 23 in den Figuren 3 bis 5 gebildet sind.

Die Verriegelungselemente sind durch aktive Betätigungselemente 26, im Ausführungsbeispiel durch noch näher zu erläuternde Hubelemente, unter Aufhebung der Vorspannung der Verriegelungselemente zur Freisetzung der Formhöhenverstellung 14 entlastbar. Die aktive Betätigung gestattet es, dass jederzeit die Formhöhenverstellung 14 betätigt werden kann. Damit kann die Verriegelungseinrichtung 16 auch während der Bewegung des beweglichen Formträgers 11 in Schließrichtung s-s auf den stationären Formträger 10 zu und von diesem weg unter Aufhebung der Vorspannung gelöst werden. Alternativ oder gleichzeitig ist auch die Formhöhenverstellung 14 während der Bewegung des beweglichen Formträgers 11 zur Verstellung des Abstandes x betätigbar. Dies erlaubt es dem Anwender, dynamisch, d.h. auch im Bewegungsablauf der Schließeinheit, eine Formhöheneinstellung oder Korrektur durchzuführen, wenn sich z.B. die Temperaturbedingungen ändern oder wenn sich z.B. bei einer Formschließeinheit mit einem Kniehebelmechanismus die gewünschte Strecklage des Kniehebels nicht mehr erzielen lässt.

Die Formhöhenverstellung 14 wird im Ausführungsbeispiel an einer säulengeführten Drei-Platten-Schließeinheit dargestellt, d.h. neben dem stationären Formträger 10 und dem beweglichen Formträger 11 ist ein Abstützelement 21 für die Schließeinrichtung 20 vorgesehen. Die Vorrichtung kann jedoch ebenso bei anderen Schließkonzepten wie z.B. Zwei-Platten-Schließeinheiten oder holmlosen Schließeinheiten eingesetzt werden. Bei Zwei-Platten-Schließeinheiten ist die Formhöhenverstellung dann meist einem der Formträger, insbesondere dem stationären Formträger 10 zugeordnet. Bei holmlosen Schließeinheiten ist der Formspannraum R üblicherweise frei von Kraftübertragungselementen zwischen den Formträgern, da stattdessen bügelartige Elemente als Kraftübertragungselemente um den Formspannraum R herum geführt werden. Im Formspannraum können Spritzgießformen 13 veränderlicher Höhe a, gemessen in Schließrichtung s-s, aufgenommen werden, so dass gegebenenfalls auch die Formhöhe über die Formhöhenverstellung 14 angepasst werden muss. Die Formhöhenverstellung 14 ist an einer als Abstützelement 21 ausgebildeten Verstellplatte angeordnet, d.h. das Abstützelement ist in Schließrichtung s-s verstellbar und damit beweglich.

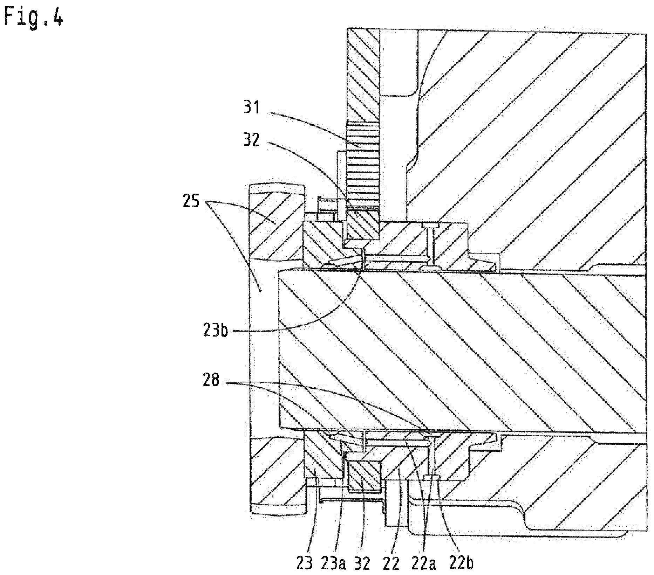

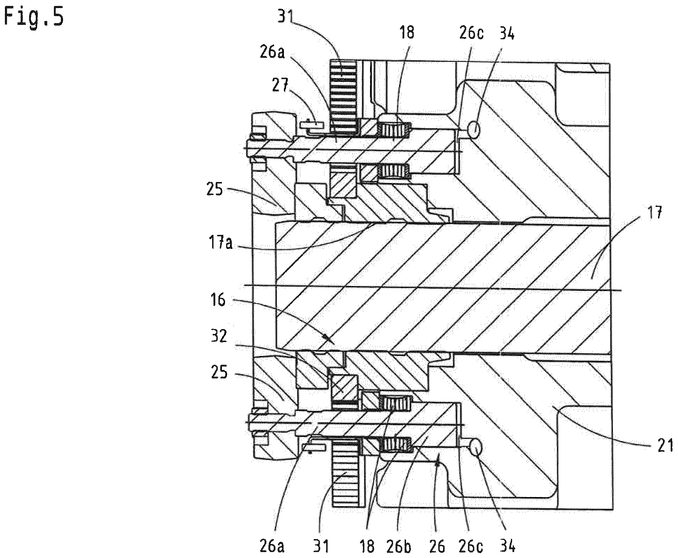

Gemäß den Figuren 4 und 5 werden die Verriegelungselemente durch Muttern 22, 23 gebildet, die mit Gewindeabschnitten 17a an den Führungselementen 17, d.h. an den Holmen oder Säulen, für das Abstützelement 21 in Eingriff stehen und mittels des Antriebs 15 verstellbar sind. Das Betätigungselement 26 ist zugleich wenigstens ein Verbindungsmittel, durch das die Muttern 22, 23 in Wirkverbindung gebracht werden. Die wenigstens zwei Muttern 22, 23 sind in Folge der Wirkung elastischer Mittel 18, die im Ausführungsbespiel gemäß Fig. 5 durch Tellerfederpakete gebildet sind, konterbar, d.h. im Betrieb vorgespannt. In der vorgespannten Stellung findet sich zwischen den Muttern 22 und 23 ein minimaler Spalt, d.h. die Muttern werden ans Gewinde der Gewindeabschnitte 17a angepresst und damit in der jeweiligen Stellung fixiert. Dies fixiert aufgrund der Lagerung der Mutter 22 an der Verstellplatte bzw. dem Abstützelement 21 auch das Abstützelement. In den Gewindeabschnitt 17a der Führungselemente 17 greift zunächst die Mutter 22 ein, die über ein Abtriebszahnrad 32 angetrieben wird. Gemäß Fig. 2 und 3 verfügt jedes Führungselement 17 über ein derartiges Abtriebszahnrad 32, das gemäß den Figuren 4 und 5 über Befestigungsmittel an der Mutter 22 befestigt oder mit dieser einstückig ist. Die Abtriebszahnräder 32 werden gemäß Fig. 2 über ein zentrales Antriebszahnrad 31 angetrieben. Bei größeren Schließeinheiten wird das Antriebszahnrad 31 durch eine vertikale Abstützung schwerkraftkompensiert im Getriebeverbund gelagert. Das Antriebszahnrad 31 selbst wird über den Antrieb 15 angetrieben, wobei dieser Antrieb vorzugsweise positionsgeregelt ist und servoelektrisch oder hydraulisch ausgeführt werden kann.

Auf das gleiche Gewinde wirkt die zweite Mutter 23, die mittels elastischer Mittel 18 Mutter 22 gegen Mutter 23 kontert. Die Ausführung der Konterung ermöglicht es, die Toleranzpaarung für das Gewinde auf dem Gewindeabschnitt 17a verschleißmindernd auszuführen oder bei der Dimensionierung größere Toleranzen zuzulassen.

Die Muttern 22, 23 liegen an einer Spannplatte 25 und am Abstützelement 21 an, die beide über das wenigstens eine Verbindungsmittel, also das Betätigungselement 26 miteinander in Wirkverbindung stehen. Das Betätigungselement 26 ist im Ausführungsbeispiel als hydraulische Kolben-Zylindereinheit ausgeführt. Es kann aber ebenso als pneumatisches oder elektromechanisches Element umgesetzt werden. Das Betätigungselement 26 weist gemäß Fig. 5 eine Kolbenstange 26a für einen am Abstützelement 21 gelagerten und gegen die Kraft der elastischen Mittel 18 betätigbaren Kolben 26b auf. Durch Zufuhr von Hydraulikmedium in den Zylinderraum 26c, der am Abstützelement 21 angeordnet ist kann der Kolben 26b in Fig. 5 nach links bewegt werden. Dadurch werden die elastischen Mittel 18 komprimiert und die Spannplatte 25, die an der Kolbenstange 26a der Kolbenzylindereinheit befestigt ist, gelangt in Fig. 5 ebenfalls weiter nach links. Dies führt zu einem Spiel zwischen den Muttern 22 und 23, d.h. die Konterung wird aufgehoben. Wird jetzt über den Antrieb 15 das Antriebszahnrad 31 betätigt, können sich die Abtriebszahnräder 32 und damit die Muttern 22, 23 drehen. Dies führt zu einer Verstellung des Abstützelementes 21. Der Zylinderraum 26c der Kolbenzylindereinheit ist am Abstützelement 21 angeordnet und die an der Spannplatte 25 gelagerte Kolbenstange 26a durchgreift im Ausführungsbeispiel die ebenfalls am Abstützelement gelagerten elastischen Mittel. Mittels Sensoren 27 wird vor Betätigung der Formhöhenverstellung 14 geprüft, ob die Vorspannung auch tatsächlich aufgehoben wurde.

Vorzugsweise ist die Vorspannkraft der elastischen Mittel 18 größer als die beim Öffnen und Schließen der Spritzgießform 13 auftretenden Kräfte, so dass das Abstützelement 21 zuverlässig in seiner jeweiligen Position feststellbar ist. Andererseits ist die Kraft der Betätigungselemente 26 größer als die Vorspannkraft der elastischen Mittel 18, um diese Vorspannung bedarfsweise aufheben zu können. Wird dies berücksichtigt, kann ein spielfreier Betriebszustand ohne Verstellung erreicht werden. Sobald aus dem Prozess heraus Modifikationen an der Formhöhe erforderlich werden, kann mittels des Betätigungselements 26 (Kolben) die Vorspannung im definierten Bereich aufgehoben werden, was die technische Grundlage für eine verschleißarme Verstellung schafft. Wird die Vorspannkraft hingegen gleich oder kleiner der Betriebskraft gewählt, kann es zu einem unschönen Klack-Effekt kommen, da im Lastwechsel unterschiedliche Gewindeflanken belastet werden, was den Verschleiß erhöht. Wird die Vorspannung zu hoch gewählt und wird für den Verstellvorgang entweder gar nicht oder nicht vollständig "entlastet", kommt es zu einem verschleißbehafteten Verstellvorgang, bei dem das System nach kurzer Zeit zerstört wird.

Im Ausführungsbeispiel wird gemäß Fig. 5 das Betätigungselement 26 durch zwei diametral zur Mittelachse der Führungselemente 17 angeordneten Kolbenstangen 26a der Kolbenzylindereinheit gebildet, um die Entlastung der elastischen Mittel 18 zu bewirken. Alternativ kann auch nur ein Betätigungselement mit Gegenlager vorgesehen sein oder es ist ebenso denkbar, mehr als zwei Betätigungselemente vorzusehen, wenn es für die Kraftsymmetrie erforderlich ist. Über die vorzugsweise eingesetzten Sensoren 27 lässt sich die Hubbewegung dahingehend überwachen, ob die jeweiligen Endlagen der Hubbewegung eingetreten sind. Diese Überwachung ist vorzugsweise an jedem Betätigungselement vorzusehen, um eine Beschädigung der Gewinde zu vermeiden.

Eine Feinjustage der Kraftverteilung auf den einzelnen Führungselementen erfolgt auf der gegenüberliegenden Seite der Führungselemente 17 in zeichnerisch nicht dargestellter Weise. An diesem Gegenlager wirkt eine manuell einstellbare Hohlmutter als Justageelement. Ziel dieser Einstellmöglichkeit ist es, die Parallelität von stationärem Formträger 10 und beweglichem Formträger 11 zueinander einzustellen und eine symmetrische Kraftverteilung in den Führungselementen zu erreichen.

Die Schmierung der einzelnen Kontaktstellen an den Gewinden und Zahnrädern erfolgt über ein mehrstufiges Schmierkonzept. Die Schmierung der Holmgewinde erfolgt über einen stationären Zugang an der zu verstellenden Gegenlagerplatte. Über diesen Zugang wird ein Schmierstoffreservat direkt in beiden Muttern befüllt. Über Verbindungskanäle 22a, 23a und umlaufende Nuten 22b, 23b ist eine optimale Verteilung des Schmiermediums an den Gewindekontaktstellen 22, 23 gewährleistet. Das Antriebszahnrad 31 wird im Zahneingriffsbereich über eine Sumpfschmierung in einem Schmiermittelsumpf 33 am tiefsten Punkt mit dem Schmiermedium benetzt. Durch Rotation des Antriebszahnrades 31 wird der Schmierstoff an den Kontaktstellen zwischen Antriebszahnrad 31 und Abtriebszahnrad 32 übergeben. Jede Schmierstelle wird mit einer eigenen Versorgungsleitung 30 versorgt, die von einer zentralen Schmierstelle 29 und Schmiermittelverteilern 34 ausgeht, die gemäß Fig. 1 an einer zentralen, für den Bediener gut zugänglichen Position nach außen verlegt ist.

Die Maschine arbeitet verfahrensgemäß folgendermaßen:
Zur Durchführung des Verfahrens ist ein verstellbares Abstützelement für eine Schließeinrichtung 20 zum Bewegen des beweglichen Formträgers 10 auf den stationären Formträger 11 zu und von diesem weg vorgesehen. Ein über einen Antrieb 15 antreibbare Formhöhenverstellung 14 wird zur Verstellung der Formhöhe verwendet. Eine Verrieglungseinrichtung verriegelt das Abstützelement 21 in seiner jeweiligen Stellung lösbar unter Vorspannung von Verriegelungselementen, also der Muttern 22, 23. Verfahrensgemäß wird zunächst die Vorspannung durch aktives Entlasten der Verriegelungselemente aufgehoben. Dadurch werden die Verriegelungselemente aus ihrer jeweiligen Stellung gelöst und gleichzeitig die Formhöhenverstellung 14 freigesetzt. Ist die Formhöhenverstellung frei, kann durch ihre Betätigung das Abstützelement 21 aus seiner jeweiligen Stellung bewegt werden, was zu einer Veränderung des Abstands x zwischen stationärem Formträger 10 und Abstützelement 21 führt. Ist die veränderte Position erreicht, kann die Formhöhenverstellung 14 durch Verriegeln der Verriegelungseinrichtung 16 unter Aufbringung der Vorspannung wieder festgelegt werden.

Da eine aktive Betätigung und damit Entlastung der Verriegelungselemente jederzeit möglich ist, kann die Verriegelungseinrichtung vorzugsweise auch während der Bewegung des beweglichen Formträgers 11 in Schließrichtung s-s entriegelt werden und/oder die Formhöhenverstellung 14 kann während der Bewegung des beweglichen Formträgers 11 zur Verstellung des Abstandes x betätigt werden. Dies gestattet eine aktive Schließkraftregelung.

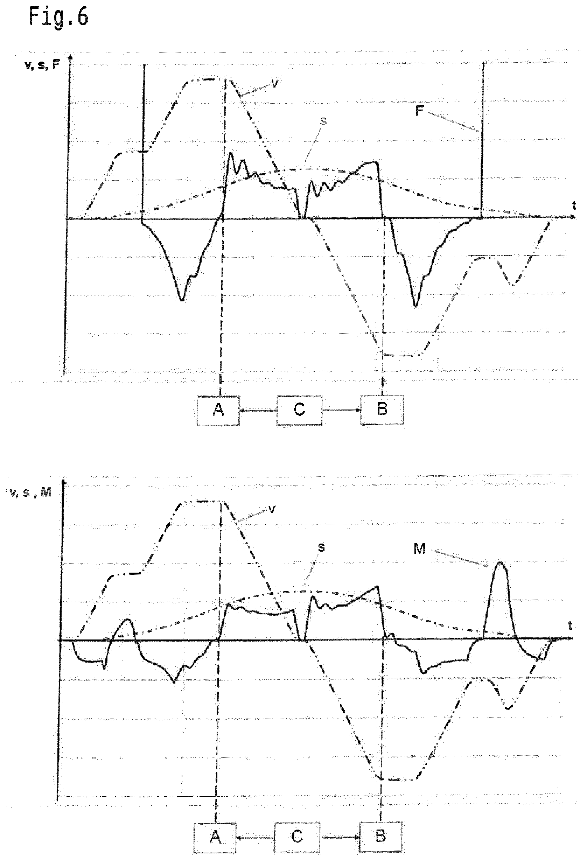

Ergänzend kann die dynamische Betriebskraft auf das Abstützelement 21 mittels eines Sensors 19 (Fig. 1) wie eines Holmsensors überwacht werden. Ziel ist es dabei, innerhalb der Öffnungs- und Schließbewegung des beweglichen Formträger 11 über die Summenkraftkennlinie einen Bereich zu identifizieren, in dem sich die Summenkraft als dynamische Betriebskraft ohne Vorspannung immer im positiven Bereich befindet, d.h. größer gleich Null ist. Fig. 6 zeigt ein Diagramm, welches die dynamischen Betriebskräfte ausweist. Ermittelt wird dazu die Betriebskraft ohne Vorspannkraft. Technisch gesehen muss die Summenkraft auf die Verstellplatte "Null" sein, da ansonsten eine Bewegung auf dem Bauteil im Sinne von Actio gleich Reactio vorliegen würde.

Gemäß Fig. 6 ist der Bereich größer gleich Null über die beiden Punkte A, B gekennzeichnet. Innerhalb dieses Bereichs ist eine verschleiß- und geräuscharme Verstellung ohne Lastwechsel im Mutterngewinde möglich. Mit der Summenkraft werden die Belastungen im Führungselement 17 umschrieben. Eine Betätigung der Formhöhenverstellung 14 sollte in einem Bereich erfolgen, der etwa vom Start des Bremsvorgangs in der hinteren Endlage des beweglichen Formträgers 11 und maximal bis zum Ende der Beschleunigungsphase aus der hinteren Endlage heraus dauert. In dieser Zeit liegt durchweg eine positive Summenkraft im Führungselement 17 an und die Verstellung der Formhöhe a kann ohne Lastwechsel im Bewegungsgewinde erfolgen.

Die Ermittlung der Summenkraft kann über zwei Wege erfolgen.
1. Die Sensoren 19 gemäß Fig. 1 messen direkt die aufgrund der dynamischen Bewegungsänderung hervorgerufenen Kräfte im Führungselement 17. Auf Basis dieser Messergebnisse lässt sich die Verstellung definiert in den Zeitraum C legen in dem die Summenkraft größer gleich Null ist. Die vier Sensoren 19 können dabei unterschiedliche Empfindlichkeiten aufweisen mit dem Ziel, eine möglichst optimale Auswertung sowohl der Holmmaximalkraft (Schließkraft) als auch der aufgrund der Bewegung hervorgerufenen Kraftänderung im Bauteil zu erhalten Fig. 6 zeigt dazu im oberen Diagramm, über die Zeit t eines Formschließvorgangs aufgetragen, die Geschwindigkeit v des beweglichen Formträgers 11, den Weg s des beweglichen Formträgers 11 und die Kraft F im Führungselement 17. Es zeigt sich, dass zwischen der maximalen und der minimalen Geschwindigkeit des beweglichen Formträgers 11, entsprechend den Punkten A, B sich ein Kraftbereich im positiven Bereich für einen Zeitraum C einstellt.
2. Die Kraftänderung im Führungselement 17 kann indirekt über Motormoment und Motordrehzahl des Antriebes der Formschließeinheit errechnet werden. Im Bereich der dynamischen Bewegung ist die Motormomentkurve (im Hinblick auf die Vorzeichen) gemäß dem unteren Diagramm in Fig. 6 nahezu identisch mit der realen Kraftkurve F im Führungselement 17. Aufgetragen wird dort über der Zeit t eines Formschließvorgangs die Geschwindigkeit v des beweglichen Formträgers 11, der Weg s des beweglichen Formträgers 11 und das Drehmoment M des Motors. Auch hier stellt sich zwischen den Punkten A und B ein Zeitraum C ein.

**Bezugszeichenliste**

| | | | |
|---|---|---|---|
| 10 | stationärer Formträger | 27 | Sensor |
| 11 | beweglicher Formträger | 28 | Schmiermittelreservoir |
| 12 | Maschinenfuß | 29 | Schmierstelle |
| 13 | Spritzgießform | 30 | Leitungen |
| 14 | Formhöhenverstellung | 31 | Antriebszahnrad |
| 15 | Antrieb für 14 | 32 | Abtriebszahnrad |
| 16 | Verriegelungseinrichtung | 33 | Schmiersumpf |
| 17 | Führungselement | 34 | Versorgungsanschluss |
| 17a | Gewindeabschnitt | 35 | Schmiermittelverteiler |
| 18 | elastische Mittel | a | Formhöhe |
| 19 | Sensor (Fig. 1) | A, B | Punkte |
| 20 | Schließeinrichtung | C | Zeitraum |
| 21 | Abstützelement | F | Kraft |
| 22, 23 | Mutter | M | Drehmoment |
| 22a, 23a | Verbindungskanäle | s | Weg |
| 22b, 23b | Nuten | s-s | Schließeinrichtung |
| 25 | Spann platte | t | Zeit |
| 26 | Betätigungsmittel | v | Geschwindigkeit |
| 26a | Kolbenstange | x | Abstand zwischen 10 und 21 |
| 26b | Kolben | R | Formspannraum |
| 26c | Zylinderraum | | |

## Patentansprüche

1. Formschließeinheit mit einer Vorrichtung zum selbsttätigen Anpassen an die Formhöhe von Spritzgießformen (13) veränderlicher Höhe (a) gemessen in Schließrichtung (s-s) für eine Spritzgießmaschine zur Verarbeitung von Kunststoffen und anderer plastifizierbarer Materialien mit
- einem stationären Formträger (10),
- einem beweglichen Formträger (11),
- einer Schließeinrichtung zum Bewegen des beweglichen Formträgers (11) in Schließrichtung (s-s) auf den stationären Formträger (10) zu und von diesem weg,
- einem verstellbaren Abstützelement (21) für die Schließeinrichtung,
- einer Formhöhenverstellung (14) zur Verstellung des Abstands (x) zwischen stationärem Formträger (10) und verstellbarem Abstützelement (21) unter Bewegung des Abstützelements,
- einem Antrieb (15) zur Betätigung der Formhöhenverstellung (14),
- einer Verriegelungseinrichtung (16) zur lösbaren Verriegelung des Abstützelements (21) in seiner jeweiligen Stellung unter Vorspannung von Verriegelungselementen, wobei die Verriegelungseinrichtung während der Bewegung des beweglichen Formträgers (11) in Schließrichtung (s-s) auf den stationären Formträger (10) zu und von diesem weg unter Aufhebung der Vorspannung lösbar ist, wobei die Verriegelungselemente durch aktive Betätigungselemente (26) zur Freisetzung der Formhöhenverstellung (14) wahlweise entlastet oder vorgespannt sind,
**dadurch gekennzeichnet, dass** beim Betrieb der Spritzgießmaschine Mittel zur Überwachung einer auf das Abstützelement (21) wirkenden Summenkraft als dynamische Betriebskraft ohne Vorspannung vorgesehen sind und dass die Verriegelungselemente der Verriegelungseinrichtung zum Aufheben der Vorspannung in einem Zeitraum lösbar sind, in dem die erfasste Summenkraft größer gleich Null ist.

2. Formschließeinheit nach Anspruch 1, **dadurch gekennzeichnet, dass** die Verriegelungselemente beim Betrieb der Formschließeinheit dynamisch nach Bedarf durch aktiv betätigbare Betätigungselemente (26) entlastbar sind.

3. Formschließeinheit nach Anspruch 1 oder 2, **dadurch gekennzeichnet, dass** die Formhöhenverstellung (14) während der Bewegung des beweglichen Formträgers (11) zur Verstellung des Abstands (x) betätigbar ist.

4. Formschließeinheit nach einem der vorhergehenden Ansprüche, **dadurch gekennzeichnet, dass** die Formhöhenverstellung (14) Muttern (22, 23) als Verriegelungselemente aufweist, die mit Gewindeabschnitten (17a) an Führungselementen (17) für das Abstützelement (21) in Eingriff stehen und mittels des Antriebs (15) verstellbar sind.

5. Formschließeinheit nach einem der vorhergehenden Ansprüche, **dadurch gekennzeichnet, dass** die Formhöhenverstellung (14) Muttern (22, 23) als Verriegelungselemente aufweist und dass das Betätigungselement (26) zugleich wenigstens ein Verbindungsmittel ist, durch das die Muttern miteinander in Wirkverbindung stehen.

6. Formschließeinheit nach Anspruch 4 oder 5, **dadurch gekennzeichnet, dass** wenigstens je zwei Muttern (22,23) in Folge der Wirkung elastischer Mittel (18) der Verriegelungseinrichtung (16) konterbar sind.

7. Formschließeinheit nach Anspruch 5 oder 6, **dadurch gekennzeichnet, dass** die Muttern (22, 23) an einer Spannplatte (25) und am Abstützelement (21) anliegen, die beide durch das wenigstens eine Verbindungsmittel miteinander in Wirkverbindung stehen.

8. Formschließeinheit nach einem der Ansprüche 4 bis 7, **dadurch gekennzeichnet, dass** die Muttern (22, 23) Verbindungskanäle (22a, 23a) und/oder Nuten (22b, 23b) aufweisen, die zur Vermittlung von Schmiermittel an die Gewindeabschnitte (17a) mit einem Schmiermittelreservoir in Verbindung stehen.

9. Formschließeinheit nach einem der vorhergehenden Ansprüche, **dadurch gekennzeichnet, dass** das Betätigungselement (26) durch eine Kolbenstange (26a) für einen am Abstützelement (21) gelagerten und gegen die Kraft der elastischen Mittel (18) betätigbaren Kolben (26b) einer Kolbenzylindereinheit gebildet ist.

10. Formschließeinheit nach Anspruch 9, **dadurch gekennzeichnet, dass** der Zylinderraum (26c) der Kolbenzylindereinheit am Abstützelement angeordnet ist und dass die an der Spannplatte (25) gelagerte Kolbenstange (26a) die ebenfalls am Abstützelement gelagerten elastischen Mittel (18) durchgreift.

11. Formschließeinheit nach einem der vorhergehenden Ansprüche, **dadurch gekennzeichnet, dass** die Vorspannkraft der elastischen Mittel (18) größer ist als die dynamischen, beim Öffnen und Schließen der Spritzgießform auftretenden Kräfte und dass die Kraft der Betätigungselemente (26) größer ist als die Vorspannkraft der elastischen Mittel (18).

12. Verfahren zur selbsttätigen Anpassung der Formhöhe von Spritzgießformen veränderlicher Höhe (a) gemessen in Schließrichtung (s-s) an einer Spritzgießmaschine zur Verarbeitung von Kunststoffen und anderer plastifizierbarer Materialien mit
- einem stationären Formträger (10),
- einem beweglichen Formträger (11),
- einem verstellbaren Abstützelement (21) für eine Schließeinrichtung (20) zum Bewegen des beweglichen Formträgers (10) auf den stationären Formträger (11) zu und von diesem weg,
- einem Antrieb (15) für eine Formhöhenverstellung (14),
- einer Verriegelungseinrichtung (16) zur lösbaren Verriegelung des Abstützelements (21) in seiner jeweiligen Stellung unter Vorspannung von Verriegelungselementen,
wobei das Verfahren folgende Schritte aufweist:
- Aufheben der Vorspannung durch aktives Entlasten der Verriegelungselemente und Lösen der Verriegelungselemente aus ihrer jeweiligen Stellung während der Bewegung des beweglichen Formträgers (11) in Schließrichtung (s-s) auf den stationären Formträger (10) zu und von diesem weg beim Betrieb der Spritzgießmaschine,
- Freisetzen der Formhöhenverstellung (14),
- Verändern des Abstands (x) zwischen stationären Formträger (10) und Abstützelement (21) unter Bewegung des Abstützelements (21) mittels des Antriebs (15),
- Festlegen der Formhöhenverstellung (14) durch Verriegeln der Verriegelungseinrichtung (16) unter Aufbringung der Vorspannung,
**dadurch gekennzeichnet, dass** beim Betrieb der Spritzgießmaschine eine auf das Abstützelement (21) wirkende Summenkraft als dynamische Betriebskraft ohne Vorspannung überwacht wird und dass ein Aufheben der Vorspannung der Verriegelungselemente in einem Zeitraum erfolgt, in dem die erfasste Summenkraft größer gleich Null ist.

13. Verfahren nach Anspruch 12, **dadurch gekennzeichnet, dass** die Formhöhenverstellung (14) während der Bewegung des beweglichen Formträgers (11) zur Verstellung des Abstands (x) betätigt wird.

14. Verfahren nach Anspruch 12 oder 13, **dadurch gekennzeichnet, dass** die Summenkraft entweder als direkte Kraftmessung mittels eines Sensors (19) im Führungselement (17) oder als indirekte Führungsgröße, abgeleitet aus der Motormomentkurve des Antriebsmotors der Formschließeinheit erfolgt.

## Claims

1. A mould closing unit, comprising a device for automatically adapting the mould height of injection moulds (13) of variable height (a) as measured in a closing direction (s-s), for an injection moulding machine for processing plastics and other plasticisable materials, comprising
- a stationary mould carrier (10),
- a movable mould carrier (11),
- a closing device for moving the movable mould carrier (11) in the closing direction (s-s), towards the stationary mould carrier (10) and away therefrom,
- an adjustable supporting element (21) for the closing device,
- a mould height adjustment device (14) for adjusting the spacing (x) between the stationary mould carrier (10) and the adjustable supporting element (21) by moving the supporting element,
- a drive (15) for actuating the mould height adjustment device (14),
- a locking device (16) for releasably locking the supporting element (21) in its current position, biased by locking elements, wherein during movement of the movable mould carrier (11) in the closing direction (s-s) towards the stationary mould carrier (10) and away therefrom, the locking device is releasable by removing the bias, wherein the locking elements are selectively relieved of load or biased by active actuation elements (26), for the purpose of releasing the mould height adjustment device (14),
**characterised in that** during operation of the injection moulding machine, monitoring means are provided for monitoring a total force, acting as a dynamic operating force with no bias on the supporting element (21), and **in that** the locking elements of the locking device are releasable for removing the bias within a period of time in which the total force is greater than or equal to zero.

2. A mould closing unit according to Claim 1, **characterised in that** the locking elements are dynamically relievable of load where necessary by actively actuable actuation elements (26) during operation of the mould closing unit.

3. A mould closing unit according to Claim 1 or 2, **characterised in that** the mould height adjustment device (14) is actuable during movement of the movable mould carrier (11), for the purpose of adjusting the spacing (x).

4. A mould closing unit according to one of the preceding claims, **characterised in that** the mould height adjustment device (14) comprises nuts (22, 23) as locking elements, which engage with threaded portions (17a) on guide elements (17) for the supporting element (21), and are adjustable using the drive (15).

5. A mould closing unit according to one of the preceding claims, **characterised in that** the mould height adjustment device (14) comprises nuts (22, 23) as locking elements, and **in that** the actuation element (26) is at the same time at least one connection means operatively connecting the nuts to one another.

6. A mould closing unit according to Claim 4 or 5, **characterised in that** in each case at least two nuts (22, 23) are lockable as a result of the action of resilient devices (18) of the locking device (16).

7. A mould closing unit according to Claim 5 or 6, **characterised in that** the nuts (22, 23) abut against a clamping plate (25) and against the supporting element (21), the two of which are operatively connected to one another by the at least one connection means.

8. A mould closing unit according to one of Claims 4 to 7, **characterised in that** the nuts (22, 23) comprise connection ducts (22a, 23a) and/or grooves (22b, 23b) which are connected to a lubricant tank for the purpose of conveying lubricant to the threaded portions (17a).

9. A mould closing unit according to one of the preceding claims, **characterised in that** the actuation element (26) is formed by a piston rod (26a) for a piston (26b) of a piston-and-cylinder unit, wherein the piston (26b) is mounted on the supporting element (21) and is actuable in opposition to the force of the resilient devices (18).

10. A mould closing unit according to Claim 9, **characterised in that** the cylinder chamber (26c) of the piston-and-cylinder unit is arranged at the supporting element, and **in that** the piston rod (26a) mounted on the clamping plate (25) passes through the resilient devices (18), which are likewise mounted on the supporting element.

11. A mould closing unit according to one of the preceding claims, **characterised in that** the biasing force of the resilient devices (18) is greater than the dynamic forces occurring when the injection mould is opened and closed, and **in that** the force of the actuation elements (26) is greater than the biasing force of the resilient devices (18).

12. A method for automatically adapting the mould height of injection moulds of variable height (a) as measured in the closing direction (s-s), on an injection moulding machine for processing plastics and other plasticisable materials, comprising
- a stationary mould carrier (10),
- a movable mould carrier (11),
- an adjustable supporting element (21) for a closing device (20) for moving the movable mould carrier (10) towards the stationary mould carrier (11) and away therefrom,
- a drive (15) for a mould height adjustment device (14),
- a locking device (16) for releasably locking the supporting element (21) in its current position, biased by locking elements,
wherein the method comprises the following steps:
- removing the bias by actively relieving the locking elements of load and releasing of the locking elements from their respective current position during movement of the movable mould carrier (11) in the closing direction (s-s) towards the stationary mould carrier (10) and away therefrom during operation of the injection moulding machine,
- releasing the mould height adjustment device (14),
- changing the spacing (x) between the stationary mould carrier (10) and the supporting element (21) by moving the supporting element (21) using the drive (15),
- fixing the mould height adjustment device (14) by locking the locking device (16), by applying the bias
**characterised in that** during operation of the injection moulding machine, a total force acting as a dynamic operating force with no bias on the supporting element (21) is monitored, and **in that** the bias on the locking elements is removed within a period of time in which the determined total force is greater than or equal to zero.

13. A method according to Claim 12, **characterised in that** the mould height adjustment device (14) is actuated during movement of the movable mould carrier (11) for the purpose of adjusting the spacing (x).

14. A method according to Claim 12 or 13, **characterised in that** the total force is either a direct force measurement using a sensor (19) in the guide element (17) or an indirect guide variable derived from the motor torque curve of the drive motor of the mould closing unit.

## Revendications

1. Unité de fermeture de moule ayant un dispositif d'adaptation automatique à la hauteur de moules de moulage par injection (13) à hauteur variable (a) mesurée dans la direction de fermeture du moule (s-s), pour une machine de moulage par injection pour l'élaboration de matières plastiques et d'autres matériaux plastifiables, comportant
- un support de moule stationnaire (10),
- un support de moule mobile (11),
- un dispositif de fermeture pour le déplacement du support de moule mobile (11) dans la direction de fermeture (s-s) sur le support de moule stationnaire (10), vers celui-ci et en s'en éloignant,
- un élément d'appui réglable (21) pour le dispositif de fermeture,
- un réglage de la hauteur de moule (14) pour le réglage de la distance (x) entre le support de moule stationnaire (10) et l'élément d'appui réglable (21) par déplacement de l'élément d'appui,
- une commande (15) pour l'actionnement du réglage de hauteur de moule (14),
- un dispositif de verrouillage (16) pour un verrouillage amovible de l'élément d'appui (21) dans sa position courante par précontrainte des éléments de verrouillage, le dispositif de verrouillage étant amovible par suppression de la précontrainte, pendant le déplacement du support de moule mobile (11) dans la direction de fermeture (s-s) sur le support de moule stationnaire (10), vers celui-ci et en s'en éloignant, les éléments de verrouillage étant au choix libérés ou précontraints par des éléments d'actionnement actifs (26) pour libérer le réglage de la hauteur de moule (14),
**caractérisée en ce que**, lors du fonctionnement de la machine de moulage par injection, des moyens sont prévus pour la surveillance d'une force globale agissant sur l'élément d'appui (21) en tant que force motrice dynamique sans précontrainte et **en ce que** les éléments de verrouillage du dispositif de verrouillage sont amovibles pour supprimer la précontrainte pendant un intervalle de temps où la force globale mesurée est supérieure ou égale à zéro.

2. Unité de fermeture de moule selon la revendication 1, **caractérisée en ce que** les éléments de verrouillage peuvent être libérés, lors du fonctionnement de l'unité de fermeture de moule, de manière dynamique si nécessaire grâce à des éléments d'actionnement (26) actionnables de manière active.

3. Unité de fermeture de moule selon la revendication 1 ou 2, **caractérisée en ce que** le réglage de hauteur de moule (14) pendant le déplacement du support de moule mobile (11) peut être actionné pour le réglage de la distance (x).

4. Unité de fermeture de moule selon l'une des revendications précédentes, **caractérisée en ce que** le réglage de hauteur de moule (14) comprend en tant qu'éléments de verrouillage des écrous (22, 23), lesquels viennent en prise avec les sections filetées (17a) sur des éléments de guidage (17) pour l'élément d'appui (21) et sont réglables au moyen de la commande (15).

5. Unité de fermeture de moule selon l'une des revendications précédentes, **caractérisée en ce que** le réglage de la hauteur de moule (14) comprend des écrous (22, 23) en tant qu'éléments de verrouillage et **en ce que** l'élément d'actionnement (26) est en même temps au moins un moyen de liaison grâce auquel les écrous coopèrent les uns avec les autres.

6. Unité de fermeture de moule selon la revendication 4 ou 5, **caractérisée en ce qu'**au moins deux écrous (22, 23) peuvent être contrés suite à l'action de moyens élastiques (18) du dispositif de verrouillage (16).

7. Unité de verrouillage de moule selon la revendication 5 ou 6, **caractérisée en ce que** les écrous (22, 23) sont adjacents à un plateau de fixation (25) et à l'élément d'appui (21), lesquels coopèrent l'un avec l'autre grâce au moyen de liaison.

8. Unité de fermeture de moule selon l'une des revendications 4 à 7, **caractérisée en ce que** les écrous (22, 23) comportent des canaux de liaison (22a, 23a) et/ou des rainures (22b, 23b), lesquel(le)s sont en liaison avec un réservoir de lubrifiant pour la fourniture de lubrifiant aux sections filetées (17a).

9. Unité de fermeture de moule selon l'une des revendications précédentes, **caractérisée en ce que** l'élément d'actionnement (26) est formé d'une tige de piston (26a) pour un piston (26b) d'une unité de cylindre à piston, fixé sur l'élément d'appui (21) et actionnable contre la force des moyens élastiques (18).

10. Unité de fermeture de moule selon la revendication 9, **caractérisée en ce que** la chambre de cylindre (26c) de l'unité de cylindre à piston est disposée dans l'élément d'appui et **en ce que** la tige de piston (26a) fixée au plateau de fixation (25) intervient également avec des moyens élastiques (10) fixés sur l'élément d'appui.

11. Unité de fermeture de moule selon l'une des revendications précédentes, **caractérisée en ce que** la force de précontrainte des moyens élastiques (18) est supérieure aux forces dynamiques enjeu lors de l'ouverture et de la fermeture du moule pour moulage par injection et **en ce que** la force des éléments d'actionnement (26) est supérieure à la force de précontrainte des moyens élastiques (18).

12. Procédé pour l'adaptation automatique de la hauteur de moules de moulage par injection à hauteur variable (a) mesurée dans la direction de fermeture (s-s) sur une machine de moulage par injection pour l'élaboration de matières plastiques et d'autres matériaux plastifiables, comportant :
- un support de moule stationnaire (10),
- un support de moule mobile (11),
- un élément d'appui réglable (21) pour un dispositif de fermeture (20) pour le déplacement du support de moule mobile (11) sur le support de moule stationnaire (10), vers celui-ci et en s'en éloignant,
- une commande (15) pour le réglage de la hauteur de moule (14),
- un dispositif de verrouillage (16) pour un verrouillage amovible de l'élément d'appui (21) dans sa position courante par précontrainte d'éléments de verrouillage,
dans lequel le procédé comprend les étapes suivantes :
- suppression de la précontrainte par libération active des éléments de verrouillage et libération des éléments de verrouillage de leur position courante pendant le déplacement du support de moule mobile (11) dans la direction de fermeture (s-s) sur le support de moule stationnaire (10) vers celui-ci et en s'éloignant de celui-ci lors du fonctionnement de la machine de moulage par injection,
- libération du réglage de la hauteur de moule (14),
- modification de la distance (x) entre le support de moule stationnaire (10) et l'élément d'appui (21) par déplacement de l'élément d'appui (21) au moyen de la commande (15),
- définition du réglage de hauteur de moule (14) par verrouillage du dispositif de verrouillage (16) en appliquant la précontrainte,
**caractérisé en ce que**, lors du fonctionnement de la machine de moulage par injection, une force globale agissant sur l'élément d'appui (21) en tant que force motrice dynamique sans précontrainte est surveillée et **en ce qu'**une suppression de la précontrainte des éléments de verrouillage se produit pendant un intervalle de temps où la force globale mesurée est supérieure ou égale à zéro.

13. Procédé selon la revendication 12, **caractérisé en ce que** le réglage de la hauteur de moule (14) est actionné pour le réglage de la distance (x) pendant le déplacement du support de moule mobile (11).

14. Procédé selon la revendication 12 ou 13, **caractérisé en ce que** la force globale agit soit en tant que mesure de force directe au moyen d'un détecteur (19) dans l'élément de guidage (17) ou en tant que grandeur de guidage indirecte, dérivée de la courbe de couple moteur du moteur d'entraînement de l'unité de fermeture de moule.
